# FASCICULE DE BREVET EUROPEEN

(11) **EP 1 559 066 B1**
(45) Date de publication et mention de la délivrance du brevet: **30.12.2009**
(21) Numéro de dépôt: 03807872.1
(22) Date de dépôt: 07.10.2003
(51) Int. Cl.: G06K 19/07

(54) **CIRCUIT INTEGRE RFID-UHF**
INTEGRIERTE RFID-UHF-SCHALTUNG
RFID-UHF INTEGRATED CIRCUIT

(30) Priorité: 09.10.2002 FR 0212505
(43) Date de publication de la demande: 03.08.2005
(73) Titulaire: Inside Contactless, 13856 Aix en Provence Cedex 3 (FR)
(72) Inventeur: KOWALSKI, Jacek, 13090 Aix en Provence (FR); SERRA, Didier, Atherton, CA 94027 (US); CHARRAT, Bruno, 13090 Aix en Provence (FR)
(74) Mandataire: Marchand, André
(86) Numéro de dépôt international: PCT/FR2003/002938
(87) Numéro de publication internationale: WO 2004/034317

(56) Documents cités:
- US-A- 5 376 943
- US-A- 5 453 747

## Description

La présente invention concerne les circuits intégrés sans contact fonctionnant par couplage inductif et les circuits intégrés sans contact fonctionnant par couplage de champ électrique.

Les circuits intégrés sans contact fonctionnant par couplage inductif, ou circuits intégrés RFID, ont connu ces dernières années un important développement. Le tableau 1 ci-après résume les caractéristiques généralement constatées et/ou normalisées pour ce type de circuit intégré sans contact.

### Tableau 1 : caractéristiques principales des circuits intégrés RFID

Fréquence de travail : 13 , 56 MHz*
Rayonnement du champ magnétique : Large
Vitesse de transfert de données data rate) : 26, 106, 424, 847 Kbits/s
Extraction signal d'horloge à partir du champ magnétique : Oui
Alimentation électrique par induction (transpondeur passif) : Oui
Distance de communication en lecture : jusqu'à 1 m
Distance de communication en écriture : jusqu'à 1 m

### Conditions opérationnelles/de travail (operational conditions/working conditions)

Eau, pluie : Oui
Saleté, poussières ambiantes (dust) : Oui
Portable à la main (hand carry) : Oui
Compatible avec le corps humain : Oui
Présence de métal tolérée : Oui si d > 2-3 cm**

### Normes & agréments (standards & agreements)

Normes ISO existantes : ISO 15693, ISO 14443
Normes ISO en cours de définition : -
Agrément USA : Oui, 3W**
Agrément Europe : Oui, 3W**
Agrément Japon : Oui, 3W**
* fréquence du champ magnétique émis par le lecteur du circuit intégré
** distance entre l'antenne du circuit intégré et l'objet métallique
** puissance maximale appliquée au circuit d'antenne du lecteur du circuit intégré

On connaît également les circuits intégrés UHF, dont le fonctionnement repose sur le principe d'un couplage de champ électrique, et dont les caractéristiques principales sont résumées dans le tableau 2 ci-après.

### Tableau 2 : caractéristiques principales des circuits intégrés UHF

Fréquence de travail : 433MHz, 905 MHz, 2.45GHz....
Rayonnement du champ électrique : Etroit et très directionnel
Vitesse de transfert de données (data rate) : 10-40 Kbits/s
Extraction signal d'horloge à partir du champ électrique : Non
Alimentation électrique par induction (transpondeur passif) : Oui
Distance de communication en lecture : jusqu'à 4 m
Distance de communication en écriture : écriture de données non prévue

### Conditions opérationnelles/de travail

Eau, pluie : Non
Saleté, poussières ambiantes (dust) : Oui
Portable à la main (hand carry) : Non
Compatible avec le corps humain : Non
Présence de métal tolérée : Non (réflexions)

### Normes & agréments (standards & agreements)

Normes ISO existantes : -
Normes ISO en cours de définition : ISO 18000-6
Agrément USA : Oui, 1W**
Agrément Europe : Oui, 500 mW**
Agrément Japon : Non
* fréquence du champ électrique émis par le lecteur du circuit intégré
** puissance maximale appliquée au circuit d'antenne du lecteur du circuit intégré

Une différence essentielle entre les circuits intégrés RFID et les circuits intégrés UHF est que ces derniers ne peuvent pas être portés par (ou attachés sur) des êtres vivants (être humain, animal) et ne fonctionnent pas en.présence d'eau ou de métal.

De plus, l'écriture de données est difficilement envisageable dans les circuits UHF de type passif (sans source d'alimentation électrique) car la puissance électrique pouvant être extraite du champ électrique UHF est trop faible pour permettre la génération d'une haute tension Vpp d'effacement programmation d'une mémoire EEPROM ou d'une mémoire FLASH.

En réalité l'écriture de données reste possible en théorie mais avec une distance de communication très faible, ou en ajoutant une source de tension telle une pile électrique. Or, dans la plupart des applications, il n'est pas envisageable d'incorporer dans une étiquette électronique UHF d'une source de tension permettant d'écrire la mémoire dans restreindre la distance de communication, tant pour des raisons d'encombrement et de prix de revient que pour des raisons de longévité du produit, de sorte que la majorité des circuits intégrés UHF est de type passif.

Egalement, l'extraction d'un signal d'horloge à partir du signal UHF n'est pas possible pour des raisons technologiques (fréquence trop élevée pour être appliquée à un diviseur de fréquence) et la synchronisation du transfert de données

Egalement, l'extraction d'un signal d'horloge à partir du signal UHF n'est pas possible pour des raisons technologiques (fréquence trop élevée pour être appliquée à un diviseur de fréquence) et la synchronisation du transfert de données nécessite d'avoir recours à un codage particulier des données (signal de synchronisation inclus dans le codage du bit).

En contrepartie les circuits intégrés UHF offrent des distances de communication nettement plus importantes que les circuits intégrés RFID (voir tableaux ci-dessus) .

En définitive, les circuits intégrés UHF offrent un champ d'application assez réduit en raison des diverses restrictions d'utilisation susmentionnées mais conviennent particulièrement bien aux applications de logistique (suivi et traçabilité de produits) en raison de leur distance de communication élevée.

Mais comme leur mémoire n'est pas inscriptible dans des conditions normales d'utilisation, l'inscription de données de traçabilité n'est pas possible (par exemple des indications de lieu et de date de stockage du produit, des indications de transit, etc..).

Les documents US 5 453 747 et US 7 091 860 décrivent un circuit intégré comprenant une interface de communication comportant une bobine d'antenne pour recevoir une première tension induite alternative lorsque le circuit intégré est en présence d'un champ magnétique RF, une unité de traitement de données reliée à la première interface de communication, l'unité de traitement de données étant équipée d'une mémoire programmable et effaçable électriquement, et une interface de communication UHF comprenant une antenne UHF pour recevoir une deuxième tension alternative induite lorsque le circuit intégré est en présence d'un signal de champ électrique UHF.

La présente invention propose un circuit intégré conforme à la revendication 1.

Selon un mode de réalisation, le circuit intégré comprend un circuit de détection de mode de communication délivrant un signal de mode dont la valeur indique quelle est l'interface de communication qui est active.

Selon un mode de réalisation, le circuit intégré comprend au moins un moyen interrupteur ayant une borne reliée à la ligne de distribution et une borne reliée au premier ou au second circuit d'alimentation électrique, et un circuit de commande du moyen interrupteur, agencé pour fermer le moyen interrupteur lorsqu'une tension d'alimentation est présente sur la borne du moyen interrupteur qui est reliée au premier ou au second circuit d'alimentation électrique.

Selon un mode de réalisation, le circuit de commande est agencé pour ouvrir prioritairement le moyen interrupteur lorsque signal de mode présente une valeur correspondant à un mode de communication dans lequel une tension électrique n'est pas présente ou ne devrait pas être présente sur la borne du moyen interrupteur qui est reliée au premier ou au second circuit d'alimentation électrique.

Selon un mode de réalisation, le second générateur d'horloge est alimenté par l'intermédiaire de la ligne de distribution et est activé par le signal de mode lorsque celui-ci présente une valeur déterminée.

Selon un mode de réalisation, le circuit intégré comprend un circuit multiplexeur piloté par le signal de mode, recevant en entrée la sortie du premier générateur d'horloge et la sortie du second générateur d'horloge, délivrant un signal d'horloge interne appliqué à l'unité de traitement de données.

Selon un mode de réalisation, le signal de mode est appliqué à l'unité de traitement de données, l'unité de traitement de données est agencée pour mettre en oeuvre au moins un protocole de transmission de données RFID et un protocole de transmission de données UHF et pour sélectionner l'un des protocoles en fonction de la valeur du signal de mode.

Selon un mode de réalisation, le circuit intégré comprend un premier circuit de modulation et de démodulation pour l'émission et la réception de données via la bobine d'antenne, un second circuit de modulation et de démodulation pour l'émission et la réception de données via l'antenne UHF, des circuits multiplexeurs et démultiplexeur pilotés par le signal de mode, pour relier l'unité de traitement de données à l'un des deux circuits de modulation et démodulation.

Selon un mode de réalisation, le circuit de détection de mode est agencé pour détecter aux bornes de la bobine la première tension induite, et porter le signal de mode à une valeur déterminée lorsque la première tension induite est détectée.

Selon un mode de réalisation, le circuit de détection de mode comprend un détecteur d'oscillations de la première tension induite.

Selon un mode de réalisation, le circuit de détection de mode comprend un détecteur à seuil de la première tension induite.

Selon un mode de réalisation, le circuit de commande du moyen interrupteur comprend un circuit survolteur délivrant une tension de fermeture du moyen interrupteur.

Selon un mode de réalisation, le circuit survolteur comprend une pompe de charges.

Selon un mode de réalisation, le moyen interrupteur comprend un transistor présentant une tension de seuil.

Selon un mode de réalisation, le moyen interrupteur est commandé par une porte logique alimentée électriquement par la deuxième tension d'alimentation.

Selon un mode de réalisation, le circuit intégré est agencé sur un support portable et forme une étiquette électronique ou une carte à puce sans contact.

Ces objets, caractéristiques et avantages ainsi que d'autres de la présente invention seront exposés plus en détail dans la description suivante d'un exemple de réalisation d'un circuit intégré RFID-UHF selon l'invention, faite à titre non limitatif en relation avec les figures jointes parmi lesquelles :
- la figure 1 représente un exemple d'architecture de circuit RFID-UHF selon l'invention,
- la figure 2 est le schéma électrique d'une variante de réalisation d'un circuit de commande représenté sur la figure 1,
- les figures 3 et 4 sont des schémas électriques de deux variantes de réalisation du détecteur de tension induite.

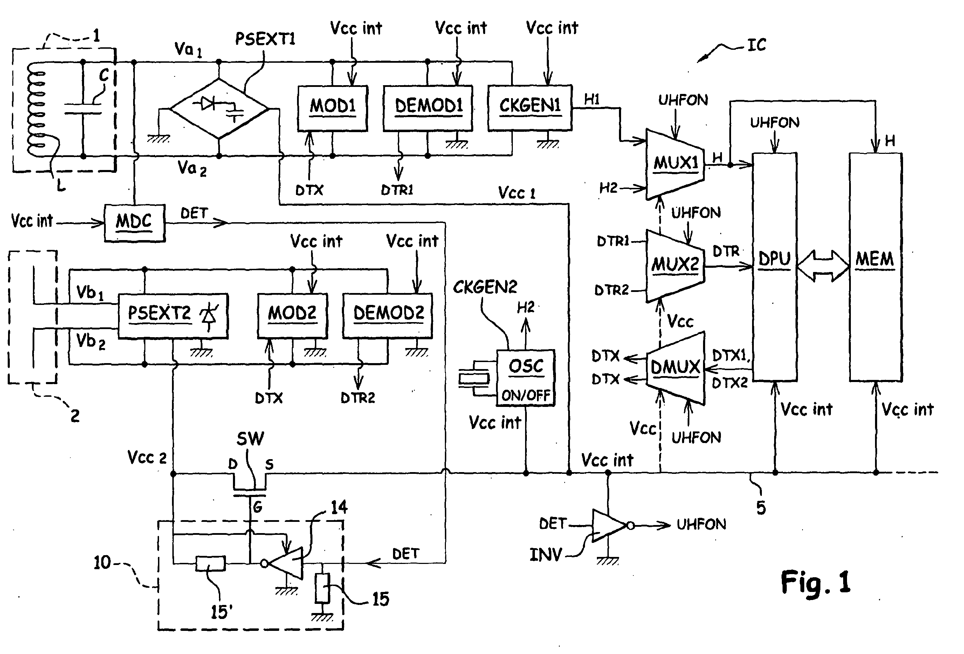

La figure 1 représente l'architecture d'un circuit intégré IC selon l'invention. Le circuit intégré comprend une première interface analogique comprenant un circuit d'antenne RF référencé 1, un circuit d'alimentation électrique PSEXT1, un générateur d'horloge CKGEN1, un circuit de modulation MDD1 et un circuit de démodulation DEMDD1.

Le circuit d'antenne 1 comprend au moins une bobine L et une capacité d'accord C, l'ensemble étant ici accordé à une fréquence de résonance de l'ordre de 13 , 56 MHz. La bobine L peut comprendre un seul ou plusieurs enroulements, et peut aussi comprendre une première bobine pour la réception de l'énergie électrique et une deuxième bobine pour la transmission des données.

Le circuit d'alimentation électrique PSEXT1 est un redresseur à diodes qui délivre une tension d'alimentation Vcc1 à partir d'une tension induite alternative Va de fréquence 13,56 MHz. Cette tension Va, qui comprend une alternance positive Va1 et une alternance négative Va2, apparaît aux bornes du circuit d'antenne 1 lorsque le circuit intégré est plongé dans un champ magnétique alternatif émis par un lecteur de circuit intégré RFID.

Le circuit de modulation MOD1 reçoit des données à émettre DIX et module la charge de la bobine d'antenne L en fonction de ces données. Ce circuit de modulation peut comprendre de façon classique un diviseur de fréquence recevant en entrée la tension Va et délivrant une sous-porteuse de modulation de charge, laquelle est combinée aux données DTX pour obtenir un signal de modulation de charge.

Le circuit de démodulation DEMOD1 extrait de la tension induite Va des données DTR1 envoyées par un lecteur de circuit intégré RFID, généralement par modulation de l'amplitude du champ magnétique ambiant, et délivre des données reçues DTR1.

Le générateur d'horloge CKGEN1 comprend classiquement des diviseurs de fréquence pour délivrer, à partir de la tension induite Va oscillant à 13,56 MHz, un signal d'horloge H1 de fréquence inférieure.

Le circuit intégré selon l'invention comprend également une deuxième interface analogique comprenant un circuit d'antenne UHF référencé 2, un circuit d'alimentation électrique PSEXT2, un générateur d'horloge CKGEN2, un circuit de modulation MOD2 et un circuit de démodulation DBM3D2.

Le circuit d'antenne 2 est une antenne filaire UHF classique, en dipôle, prévue ici pour recevoir un signal de champ électrique oscillant à une fréquence déterminée, typiquement 433 MHz, 905 MHz, 2.45 GHz... Cette antenne en dipôle comprend classiquement deux brins de longueur lambda/4 chacun (soit une longueur totale de lambda/2), lambda étant la longueur d'onde du signal de champ électrique.

Le circuit d'alimentation électrique PSEXT2 délivre une tension d'alimentation Vcc2 extraite d'une tension induite alternative Vb (Vbl, Vb2) qui apparaît aux bornes de l'antenne filaire 2 lorsque le circuit intégré est en présence d'un champ électrique émis par un lecteur de circuit intégré UHF.

Le circuit de modulation MOD2 reçoit des données à émettre DTX et module la charge de l'antenne filaire 2 en fonction des données DTX. Ce circuit de modulation peut comprendre de façon classique un diviseur de fréquence pour délivrer une sous-porteuse de modulation de charge, qui est combinée aux données DTX pour obtenir un signal de modulation de charge.

Le circuit de démodulation DEMOD2 extrait de la tension induite Vb des données envoyées par un lecteur, par modulation de l'amplitude du signal de champ électrique, et délivre des données reçues DTR2.

Le générateur d'horloge CKGEN2 comprend un oscillateur à quartz OSC délivrant un signal d'horloge H2. L'oscillateur OSC comprend une entrée ON/OFF d'activation/désactivation, et reçoit sur cette entrée un signal de mode UHFON. Le circuit intégré selon l'invention comprend également un circuit de détection de mode MDC qui délivre un signal de détection DET. Le signal DET est appliqué à une porte inverseuse INV dont la sortie délivre le signal de mode. UHFON. Le circuit MDC est ici agencé pour détecter aux bornes de la bobine L du circuit d'antenne 1 la présence de la tension alternative Va, par exemple la présence d'une alternance Va1 sur une borne de la bobine. Par convention, le signal DET est à 1 et le signal UHFON est à 0 quand la tension alternative Va est présente sur la bobine L. Dans le cas contraire, le signal DET est à 0 et le signal UHFON à 1.

Le circuit intégré selon l'invention comprend également une unité de traitement de données DPU (séquenceur à logique câblée ou microprocesseur), une mémoire MEM comprenant des zones programmable et effaçable électriquement de type EEPROM ou FLASH, qui est associée à l'unité DPU, ainsi que des multiplexeurs MUX1, MUX2 et un démultiplexeur DMUX.

L'unité DPU reçoit sur une entrée le signal de mode UHFON. L'unité DPU est programmée pour coder des données à émettre DTX1 et décoder des données reçues DTR selon un protocole de codage/décodage prévu pour les circuits intégrés RFID quand le signal de mode UHFON est égal à 0. L'unité DPU est également programmée pour coder des données à émettre DTX2 et décoder des données reçues DTR selon un protocole de codage/décodage prévu pour les circuits intégrés UHF quand le signal de mode UHFON est égal à 1.

Le multiplexeur MUX1 reçoit sur une première entrée le signal d'horloge H1 délivré par le générateur-extracteur CKGEN1 et reçoit sur une deuxième entrée le signal d'horloge H2 délivré par le générateur-oscillateur CKGEN2. Le multiplexeur MUX1 est piloté par le signal de mode UHFON et délivre un signal d'horloge interne H, lequel est appliqué à l'unité DPU ainsi qu'à la mémoire MEM. Selon la valeur du signal de mode UHFON, 0 ou 1, le signal d'horloge interne H est égal au signal H1 ou au signal H2.

Le multiplexeur MUX2 reçoit sur une première entrée des données DTR1 délivrées par le démodulateur DEMOD1 et reçoit sur une deuxième entrée des données DTR2 délivrée par le démodulateur DEMOD2. Le multiplexeur MUX2 est piloté par le signal de mode UHFON et délivre des données DTR à l'unité DPU pour décodage et traitement. Selon la valeur du signal de mode UHFON, 0 ou 1, les données DTR sont les données DTR1 ou les données DTR2.

Le démultiplexeur DMUX est piloté par le signal de mode UHFON et reçoit sur une entrée unique des données DTX délivrées par l'unité de traitement DPU. Selon la valeur du signal de mode UHFON, le démultiplexeur DMUX délivre ces données sur une première sortie qui est reliée à l'entrée du modulateur MOD1 ou sur une deuxième sortie qui est reliée à l'entrée du modulateur MOD2.

Le circuit intégré selon l'invention comprend également un système de gestion d'alimentation comprenant une ligne de distribution 5 d'une tension d'alimentation interne Vccint, un interrupteur SW et un circuit 10 de commande de l'interrupteur. SW. La sortie du circuit d'alimentation PSEXT2 est reliée à la ligne de distribution 5 par l'intermédiaire de l'interrupteur SW tandis que la sortie du circuit d'alimentation PSEXT1 est reliée directement à la ligne de distribution 5. Le circuit de commande 10 reçoit sur une première entrée la tension Vcc2 et sur une deuxième entrée le signal DET. Le générateur d' horloge CKGEN2 est ici alimenté par la tension Vccint, ainsi que les éléments MOD1, MOD2, DEMOD1, DEMOD2, CKGEN, DPU, MEM,...

Dans une variante d'exécution, un agencement inverse de l'interrupteur SW pourrait être choisi, en disposant l'interrupteur SW à la sortie du circuit PSEXT1.

Le circuit intégré selon l'invention présente deux modes de fonctionnement principaux, à savoir le mode RFID et le mode UHF.

Dans le mode RFID, le circuit intégré reçoit la tension d'alimentation Vcc1 délivrée par le circuit PSEXT1 et le signal UHFON est à 0. Le générateur CKGEN2 est inactif (OFF) et le générateur CKGEN1 délivre le signal d'horloge H1. La tension Vcc1 est présente sur la ligne de distribution 5 et forme ainsi la tension Vccint. Les données reçues DTR1 (données ou commandes) délivrées par le circuit DEMDD1 sont appliquées à l'unité DPU via le multiplexeur MUX2 pour décodage et exécution (commandes) et, éventuellement, enregistrement dans la mémoire MEM (données). Les données à émettre DTX délivrées par l'unité DPU sont appliquées au circuit MOD1 via le démultiplexeur DMUX.

Dans le mode UHF, le circuit intégré reçoit la tension d'alimentation Vcc22 délivrée par le circuit PSEXT2 et le signal UHFON est à 1. Le générateur CKGEN2 délivre le signal d'horloge H2. La tension Vcc2 est présente sur la ligne de distribution 5 et forme ainsi la tension Vccint. Les données reçues DTR2 (données ou commandes) délivrées par le circuit DEMOD2 sont appliquées à l'unité DPU via le multiplexeur MUX2 pour décodage et exécution (commandes). Comme indiqué plus haut, l'enregistrement de données dans la mémoire MEM n'est pas envisagé dans le mode UHF, l'énergie extraite via le circuit d'antenne UHF étant trop faible pour produire une tension Vpp de programmation ou d'effacement des zones effaçables et programmables de la mémoire MEM. Les données à émettre DTX délivrées par l'unité DPU sont appliquées au circuit MDD1 via le démultiplexeur DMUX.

Le fonctionnement du circuit de commande 10 est le suivant :
1) quand la tension Vcc2 n'est pas nulle et le signal DET à 0 (pas de tension Va sur la bobine L), le circuit de commande 10 ferme l'interrupteur SW de sorte que la tension Vcc2 est présente sur la ligne de distribution 5.
2) quand le signal DET est à 1 (détection de la tension Va sur la bobine L), le circuit de commande 10 ouvre prioritairement l'interrupteur SW, que la tension Vcc2 soit nulle ou ne soit pas nulle, de sorte que seule la tension Vcc1 issue du redressement de la tension Va est présente sur la ligne de distribution 5.

Un troisième cas est celui où la tension Vcc2 est nulle et le signal DET à 0. Aucune des deux tensions Vcc1 ou Vcc2 n'étant présente, l'état de l'interrupteur SW est sans importance et celui-ci sera généralement fermé faute d'alimentation.

Ainsi, lorsque les tensions Vcc1 et Vcc2 ne sont pas nulles, le circuit de commande 10 donne ici la priorité à la tension Vcc1 en ouvrant l'interrupteur SW. Le circuit de commande 10 permet de gérer les éventuels conflits entre les tensions Vcc1, Vcc2, par exemple en présence d'un lecteur de type RFID et d'un lecteur de type UHF. Une telle situation peut par exemple se produire dans un centre de gestion de produits prévu pour lire divers types d'étiquettes électroniques.

Un choix inverse peut être prévu mais le fait de choisir le mode RFID en tant que mode prioritaire offre l'avantage de permettre l'écriture de données dans la mémoire MFM.

Le circuit de commande 10 n'intervient qu'à la mise sous tension. Une fois la tension d'alimentation stabilisée, l'état du circuit de commande 10 peut être verrouillé par tout moyen, par exemple au moyen du signal classique POR (Power On Reset) .

La discrimination du mode RFID et du mode UHF par une détection directe de la tension Va sur la bobine L permet de délivrer rapidement les signaux DET et UHFON dès l'instant où la bobine L se trouve en présence d'un champ magnétique inducteur. Il demeure toutefois possible de fonder la discrimination de mode sur une détection de la tension Vcc1 ou de la tension Vcc2.

Sur la figure 1, l'interrupteur SW est un transistor EMOS dont le drain D est connecté à la sortie du circuit PSEXT2 et la source S connectée à la ligne de distribution 5. Le circuit de commande 10 comprend une porte inverseuse 14 recevant en entrée le signal DET et dont la sortie attaque la grille G du transistor SW. Afin d'assurer la fermeture du transistor SW lorsque la tension Vcc2 apparaît (c'est-à-dire avant que la tension Vcc2 ne soit présente sur la ligne de distribution 5), la borne d'alimentation de la porte inverseuse 14 est connectée à la sortie du circuit PSEXT2 et reçoit directement la tension Vcc2. L'entrée de la porte inverseuse 14 est connectée à la masse par l'intermédiaire d'une résistance de stabilisation 15 de forte valeur afin d'être maintenue à 0 en l'absence du signal DET. A la place de la résistance 15, une résistance 15' peut également être disposée entre la sortie de la porte 14 et la tension Vcc2.

Si par convention inverse le signal DET doit être à 0 au lieu d'être à 1 quand la tension Va est détectée sur la bobine L, une autre porte inverseuse est ajoutée en série avec la porte 14.

Avec ce mode de réalisation du circuit de commande 10, la tension Vccint présente sur la ligne de distribution 5 est sensiblement inférieure à la tension Vcc2 en raison de la tension de seuil VT du transistor SW (de l'ordre de 1 volt pour un transistor MOS). Une telle perte de tension peut n'être pas souhaitable dans certaines applications, car elle limite la distance maximale de communication avec un lecteur UHF.

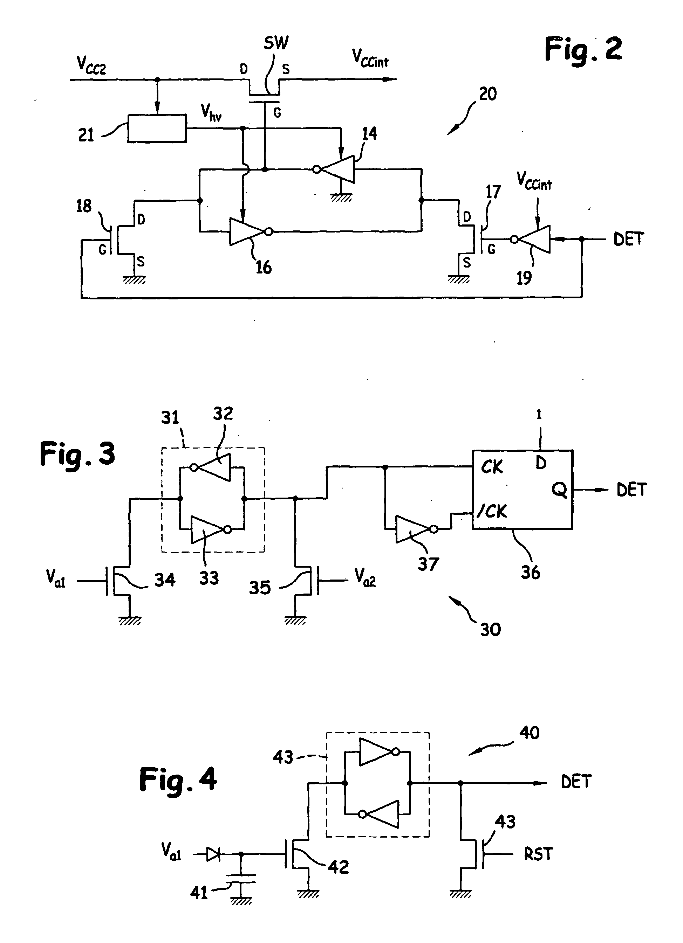

La figure 2 représente un mode de réalisation 20 du circuit de commande permettant de pallier cet inconvénient. Le circuit de commande 20 comprend un circuit survolteur 21 alimenté par la tension Vcc2, réalisé par exemple au moyen d'une pompe de charges. La sortie du circuit 21 délivre une tension survoltée Vhv. De préférence, la tension Vhv est au moins égale à [Vcc2+VT] pour compenser la tension de seuil VT du transistor SW. La tension Vhv est appliquée sur la borne d'alimentation de la porte inverseuse 14 dont le niveau logique "1" devient ainsi égal à Vhv. De plus, le circuit de commande 20 est conçu pour assurer l'isolation de la tension Vhv par rapport à la tension Vccint, laquelle représente le niveau logique "1" du signal DET. A cet effet, la sortie de la porte inverseuse 14 attaque l'entrée d'une autre porte inverseuse 16 dont la sortie est ramenée sur l'entrée de la porte 14, l'ensemble formant un verrou ("latch"). Chacune des entrées des portes 14 et 16 est connectée au drain D d'un transistor NMOS de référence 17, respectivement 18, dont la source S est connectée à la masse. La grille G du transistor 18 est commandée par le signal DET et celle du transistor 17 par un signal inverse du signal DET, délivré par une porte inverseuse 19.

Le circuit de commande 20 fonctionne comme une porte inverseuse. Quand le signal DET est à 0 la sortie de la porte 19 est à 1 et le transistor 17 est passant. Le transistor 17, lorsqu'il est passant, met à 0 l'entrée de la porte 14. La sortie de la porte 14 délivre alors la tension Vhv (1 logique) sur la grille G du transistor SW.

La figure 3 représente un exemple de réalisation du circuit de détection MDC sous la forme d'un détecteur d'oscillation 30. Le détecteur 30 comprend un verrou 31 formé par deux portes inverseuses 32, 33 agencées tête-bêche, dont l'entrée et la sortie peuvent être mises à 0 par deux transistors MOS 34, 3,5 pilotés respectivement par les demi-alternances positives Va1 et négatives Va2 de la tension Va. Une bascule D 36 ayant deux entrées d'horloge complémentaires CK et /CK, est connectée par l'entrée CK à la porte bidirectionnelle 31, l'entrée CK étant ramenée sur l'entrée /CK par l'intermédiaire d'une porte inverseuse 37. L'entrée D de la bascule 36 est maintenue à 1 (Vccint) et la sortie Q délivre le signal DET. Lorsqu'une oscillation apparaît aux bornes de la bobine L, les transistors 34 et 35 sont rendus passants l'un après l'autre. La bascule D voit tout d'abord un front montant sur son entrée CK puis un front montant sur son entrée /CK. La sortie Q recopie alors l'entrée D et le signal DET passe à 1.

Comme on l'a indiqué plus haut, l'état du circuit de commande 10 ou 20 peut être verrouillé une fois la tension d'alimentation Vcc1 ou Vcc2 stabilisée. Le signal DET peut par exemple être verrouillé au moyen d'une deuxième bascule D recevant sur son entrée D le signal DET et sur son entrée d'horloge le signal classique POR apparaissant à la mise sous tension.

Le détecteur d'oscillation 30 qui vient d'être décrit présente une commutation rapide car une seule oscillation complète de la tension Va (c'est-à-dire deux demi-alternances Va1 et Va2) est suffisante pour faire passer le signal DET à 1.

La figure 4 représente un autre mode de réalisation du circuit de détection MDC, sous la forme d'un détecteur à seuil 40. Bien que plus lent à déclencher, ce circuit 40 peut également être utilisé. Une demi-alternance de la tension Va, par exemple Va1, est appliquée à une capacité 41 de faible valeur par l'intermédiaire d'une diode. La capacité 41 attaque la grille d'un transistor NMOS 42. Le transistor 42 est connecté entre la masse et l'entrée d'un verrou 43 dont la sortie délivre le signal DET. Lorsque la charge de la capacité 41 atteint la tension de seuil VT du transistor 42, le transistor 42 devient passant et met à 0 l'entrée du verrou 43 dont la sortie DET passe à 1. Un transistor 43 de remise à 0, piloté par un signal RST, peut être prévu à la sortie du verrou 43.

L'interrupteur SW peut comprendre en pratique plusieurs transistors, par exemple un transistor PMOS en parallèle avec un transistor NMOS, ou peut comprendre tout autre moyen de commutation. La présente invention est susceptible de diverses variantes de réalisation et perfectionnements, en ce qui concerne le circuit de commande de l'interrupteur, le système de gestion d'alimentation, le détecteur de la tension alternative aux bornes de la bobine, la génération du signal de mode, etc..

Le système de gestion d'alimentation qui vient d'être décrit comprend un minimum d'éléments permettant d'arriver au résultat recherché avec un coût minimum et un encombrement réduit à la surface de silicium d'un circuit intégré. Toutefois, d'autres moyens interrupteurs peuvent être prévus, par exemple un interrupteur disposé entre la sortie du circuit PSEXT1 et la ligne de distribution 5. Cet autre interrupteur peut aussi être commandé par un circuit survolteur afin de ne pas diminuer le périmètre de communication sans contact entre le circuit intégré et un lecteur RFID. Cet interrupteur supplémentaire peut par exemple être fermé quand la tension Vcc1 apparaît, et ouvert dans les autres cas.

## Revendications

1. Circuit intégré sans contact (IC) comprenant :
- une interface de communication RFID (1, PSEXT1, MOD1, DEMOD1, CKGEN1) comportant une bobine d'antenne (L) pour recevoir une première tension induite alternative (Va) lorsque le circuit intégré est en présence d'un champ magnétique RF,
- une unité de traitement de données (DPU) reliée à la première interface de communication, l'unité de traitement de données étant équipée d'une mémoire (MEM) programmable et effaçable électriquement,
- une interface de communication UHF (2, PSEXT2, MOD2, DEMDD2, CKSEN2) comprenant une antenne UHF (2) pour recevoir une deuxième tension alternative induite (Vb) lorsque le circuit intégré est en présence d'un signal de champ électrique UHF, et
- un moyen de multiplexage (MUX1, MUX2, DMUX) pour relier l'unité de traitement de données (DPU) à l'une ou l'autre des deux interfaces de communication,
**caractérisé en ce qu'**il comprend en outre :
- un premier circuit d'alimentation électrique (PSEXT1) pour extraire de la première tension alternative induite (Va) une première tension d'alimentation (Vcc1),
- un second circuit d'alimentation électrique (PSEXT2) pour extraire de la deuxième tension alternative induite (Vb) une deuxième tension d'alimentation (Vcc2),
- une ligne (5) de distribution d'une tension d'alimentation électrique interne (Vccint), reliée d'une part au premier circuit d'alimentation électrique (PSEXT1) et d'autre part au second circuit d'alimentation électrique (PSEXT2),
- un premier générateur d'horloge (CKGEN1) agencé pour extraire de la première tension induite (Va) un premier signal d'horloge (H1), par division de la fréquence de la première tension induite (Va),
- un second générateur d'horloge (CKGEN2) comprenant un oscillateur (OSC) pour délivrer un second signal d'horloge (H2), et
- des moyens pour activer le second générateur d'horloge (CKGEN2) lorsque le circuit intégré reçoit des données par l'intermédiaire de l'interface de communication UHF.

2. Circuit intégré selon la revendication 1, comprenant un circuit (MDC, INV) de détection de mode de communication délivrant un signal de mode (DET, UHFON) dont la valeur indique quelle est l'interface de communication qui est active.

3. Circuit intégré selon la revendication 2, comprenant :
- au moins un moyen interrupteur (SW) ayant une borne reliée à la ligne de distribution (5) et une borne reliée au premier ou au second circuit d'alimentation électrique (PSEXT1, PSEXT2),
- un circuit (10, 20) de commande du moyen interrupteur (SW), agencé pour fermer le moyen interrupteur lorsqu'une tension d'alimentation (Vcc2) est présente sur la borne du moyen interrupteur qui est reliée au premier ou au second circuit d'alimentation électrique.

4. Circuit intégré selon la revendication 3, dans lequel le circuit de commande (10, 20) est agencé pour ouvrir prioritairement le moyen interrupteur lorsque signal de mode (DET, UHFON) présente une valeur correspondant à un mode de communication dans lequel une tension électrique (Vcc2) n'est pas présente ou ne devrait pas être présente sur la borne du moyen interrupteur (SW) qui est reliée au premier ou au second circuit d'alimentation électrique.

5. Circuit intégré selon la revendication 4, dans lequel le second générateur d'horloge est alimenté par l'intermédiaire de la ligne de distribution (5) et est activé (ON/OFF) par le signal de mode lorsque celui-ci présente une valeur déterminée.

6. Circuit intégré selon l'une des revendications 2 à 5, comprenant un circuit multiplexer (MUX1) piloté par le signal de mode, recevant en entrée la sortie du premier générateur d'horloge et la sortie du second générateur d'horloge, délivrant un signal d'horloge interne (H) appliqué à l'unité de traitement de données.

7. Circuit intégré selon l'une des revendications 2 à 6, dans lequel le signal de mode est appliqué à l'unité de traitement de données, l'unité de traitement de données est agencée pour mettre en oeuvre au moins un protocole de transmission de données RFID et un protocole de transmission de données UHF et pour sélectionner l'un des protocoles en fonction de la valeur du signal de mode.

8. Circuit intégré selon l'une des revendications 2 à 7, comprenant :
- un premier circuit (MOD1, DEMOD1) de modulation et de démodulation pour l'émission et la réception de données via la bobine d'antenne (L),
- un second circuit (MOD2, DEMOD2) de modulation et de démodulation pour l'émission et la réception de données via l'antenne UHF,
- des circuits multiplexeurs (MUX2) et démultiplexeur (DMUX) pilotés par le signal de mode, pour relier l'unité de traitement de données (DPU) à l'un des deux circuits de modulation et démodulation.

9. Circuit intégré selon l'une des revendications 2 à 8, dans lequel le circuit de détection de mode (MDC) est agencé pour détecter aux bornes de la bobine (L) la première tension induite (Va), et porter le signal de mode à une valeur déterminée lorsque la première tension induite est détectée.

10. Circuit intégré selon l'une des revendications 2 à 9, dans lequel le circuit de détection de mode (MDC) comprend un détecteur d'oscillations de la première tension induite.

11. Circuit intégré selon l'une des revendications 2 à 10, dans lequel le circuit de détection de mode (MDC) comprend un détecteur à seuil de la première tension induite.

12. Circuit intégré selon l'une des revendications 3 et 4, dans lequel le circuit (20) de commande du moyen interrupteur (SW) comprend un circuit survolteur (21) délivrant une tension (Vhv) de fermeture du moyen interrupteur.

13. Circuit intégré selon la revendication 12, dans lequel le circuit survolteur comprend une pompe de charges.

14. Circuit intégré selon l'une des revendications 12 et 13, dans lequel le moyen interrupteur comprend un transistor présentant une tension de seuil (VT).

15. Circuit intégré selon l'une des revendications 3 et 4, dans lequel le moyen interrupteur (SW) est commandé par une porte logique (14) alimentée électriquement par la deuxième tension d'alimentation (Vcc2).

16. Circuit intégré selon l'une des revendications 1 à 15, agencé sur un support portable et formant une étiquette électronique ou une carte à puce sans contact.

## Claims

1. Contactless integrated circuit (IC) comprising:
- an RFID communication interface (1, PSEXT1, MOD1, DEMOD1, CKGEN1) comprising an antenna coil (L) for receiving a first induced alternating voltage (Va) when the integrated circuit is in the presence of a magnetic field RF,
- a data processing unit (DPU) linked to the first communication interface, the data processing unit being provided with an electrically programmable and erasable memory (MEM),
- a UHF communication interface (2, PSEXT2, MOD2, DEMOD2, CKGEN2) comprising a UHF antenna (2) for receiving a second induced alternating voltage (Vb) when the integrated circuit is in the presence of a signal of UHF electric field, and
- a multiplexing means (MUX1, MUX2, DMUX) for linking the data processing unit (DPU) to one or the other of the two communication interfaces,
**characterised in that** it also comprises:
- a first power supply circuit (PSEXT1) for extracting from the first induced alternating voltage (Va) a first supply voltage (Vcc1),
- a second power supply circuit (PSEXT2) for extracting from the second induced alternating voltage (Vb) a second supply voltage (Vcc2),
- a line (5) for distributing an internal power supply voltage (Vccint), linked on the one hand to the first power supply circuit (PSEXT1) and on the other hand to the second power supply circuit (PSEXT2),
- a first clock generator (CKGEN1) arranged for extracting from the first induced voltage (Va) a first clock signal (H1), by division of the frequency of the first induced voltage (Va),
- a second clock generator (CKGEN2) comprising an oscillator (OSC) for supplying a second clock signal (H2), and
- means for activating the second clock generator (CKGEN2) when the integrated circuit receives data through the UHF communication interface.

2. Integrated circuit according to claim 1, comprising a communication mode detection circuit (MDC, INV) supplying a mode signal (DET, UHFON) which value indicates which communication interface is active.

3. Integrated circuit according to claim 2, comprising:
- at least one switching means (SW) having a terminal linked to the distribution line (5) and one terminal linked to the first or second power supply circuit (PSEXT1, PSEXT2),
- a circuit (10, 20) for controlling the switching means (SW), arranged to close the switching means when a supply voltage (Vcc2) is present on the terminal of the switching means which is linked to the first or second power supply circuit.

4. Integrated circuit according to claim 3, wherein the control circuit (10, 20) is arranged to open prioritarily the switching means when the mode signal (DET, UHFON) has a value corresponding to a communication mode in which an electrical voltage (Vcc2) is not present or should not be present on the terminal of the switching means (SW) which is linked to the first or second power supply circuit.

5. Integrated circuit according to claim 4, wherein the second clock generator is powered through the distribution line (5) and is activated (ON/OFF) by the mode signal when it has a determined value.

6. Integrated circuit according to one of claims 2 to 5, comprising a multiplexer circuit (MUX1) driven by the mode signal, receiving in input the output of the first clock generator and the output of the second clock generator, supplying an internal clock signal (H) applied to the data processing unit.

7. Integrated circuit according to one of claims 2 to 6, wherein the mode signal is applied to the data processing unit, the data processing unit is arranged to implement at least one RFID data transmission protocol and one UHF data transmission protocol and to select one of the protocols according to the value of the mode signal.

8. Integrated circuit according to one of claims 2 to 7, comprising:
- a first modulation and demodulation circuit (MOD1, DEMOD1) for emitting and receiving data via the antenna coil (L),
- a second modulation and demodulation circuit (MOD2, DEMOD2) for emitting and receiving data via the UHF antenna,
- multiplexer (MUX2) and demultiplexer (DMUX) circuits driven by the mode signal, for linking the data processing unit (DPU) to one of the two modulation and demodulation circuits.

9. Integrated circuit according to one of claims 2 to 8, wherein the mode detection circuit (MDC) is arranged to detect at the terminals of the coil (L) the first induced voltage (Va), and bring the mode signal to a determined value when the first induced voltage is detected.

10. Integrated circuit according to one of claims 2 to 9, wherein the mode detection circuit (MDC) comprises a detector of oscillations of the first induced voltage.

11. Integrated circuit according to one of claims 2 to 10, wherein the mode detection circuit (MDC) comprises a threshold detector of the first induced voltage.

12. Integrated circuit according to one of claims 3 and 4, wherein the circuit (20) for controlling the switching means (SW) comprises a booster circuit (21) supplying a voltage (Vhv) for closing the switching means.

13. Integrated circuit according to claim 12, wherein the booster circuit comprises a charge pump.

14. Integrated circuit according to one of claims 12 and 13, wherein the switching means comprises a transistor having a threshold voltage (VT).

15. Integrated circuit according to one of claims 3 and 4, wherein the switching means (SW) is controlled by a logic gate (14) electrically powered by the second supply voltage (Vcc2).

16. Integrated circuit according to one of claims 1 to 15, arranged on a portable support and forming an electronic tag or a contactless chip.

## Patentansprüche

1. Integrierter Schaltkreis ohne Kontakt (IC) umfassend:
- eine RFID-Kommunikationsschnittstelle (1, PSEXT1, MOD1, DEMOD1, CKGEN1) mit einer Antennenspule (L) zum Aufnehmen einer ersten induzierten Wechselspannung (Va) wenn der integrierte Schaltkreis einem RF-Magnetfeld unterworfen ist,
- eine Datenverarbeitungseinheit (DPU), die mit der ersten Kommunikationsschnittstelle verbunden ist, wobei die Datenverarbeitungseinheit mit einem Speicher (MEM), der elektrisch programmierbar und löschbar ist, ausgerüstet ist,
- eine UHF-Kommunikationsschnittstelle (2, PSEXT2, MOD2, DEMOD2, CKGEN2) umfassend eine UHF-Antenne (2) zum Aufnehmen einer zweiten induzierten Wechselspannung (Vb) wenn der integrierte Schaltkreis einem elektrischen Feldsignal im UHF-Bereich unterworfen ist, und
- ein Multiplexiermittel (MUX1, MUX2, DMUX) zum Verbinden der Datenverarbeitungseinheit (DPU) mit der einen oder der anderen der zwei Kommunikationsschnittstellen,
**dadurch gekennzeichnet, dass** er des Weiteren folgendes umfasst:
- einen ersten Stromversorgungsschaltkreis (PSEXT1), um der ersten induzierten Wechselspannung (Va) eine erste Versorgungsspannung (Vcc1) zu entnehmen,
- einen zweiten Stromversorgungsschaltkreis (PSEXT2), um der zweiten induzierten Wechselspannung (Vb) eine zweite Versorgungsspannung (Vcc2) zu entnehmen,
- eine Leitung (5) zur Verteilung einer internen Stromversorgungsspannung (Vccint), die einerseits mit dem ersten Stromversorgungsschaltkreis (PSEXT1) und andererseits mit dem zweiten Strumversorgungsschaltkreis (PSEXT2) verbunden ist,
- einen ersten Taktgenerator (CKGEN1), der angeordnet ist, um der ersten induzierten Spannung (Va) ein erstes Taktsignal (H1) zu entnehmen, und dies durch Teilung der Frequenz der ersten induzierten Spannung (Va),
- einen zweiten Taktgenerator (CKGEN2) umfassend einen Oszillator (OSC), um ein zweites Taktsignal (H2) abzugeben, und
- Mittel, um den zweiten Taktgenerator (CKGEN2) zu aktivieren, wenn der integrierte Schaltkreis Daten über die UHF-Kommunikationsschnittstelle empfängt.

2. Integrierter Schaltkreis nach Anspruch 1, umfassend einen Schaltkreis (MDC, INV) zur Erkennung des Kommunikationsmodus, der ein Modussignal (DET, UHFON) abgibt, dessen Wert angibt, welche Kommunikationsschnittstelle aktiv ist.

3. Integrierter Schaltkreis nach Anspruch 2, umfassend:
- zumindest ein Trennschaltmittel (SW) mit einer Klemme, die mit der Verteilerleitung (5) verbunden ist, und einer Klemme, die mit dem ersten oder dem zweiten Stromversorgungsschaltkreis (PSEXT1, PSEXT2) verbunden ist,
- einen Steuerschaltkreis (10, 20) zur Steuerung des Trennschaltmittels (SW), der angeordnet ist, um das Trennschaltmittel zu schließen, wenn eine Versorgungsspannung (Vcc2) an der Klemme des Trennschaltmittels, die mit dem ersten oder dem zweiten Stromversorgungsschaltkreis verbunden ist, vorhanden ist.

4. Integrierter Schaltkreis nach Anspruch 3, in dem der Steuerschaltkreis (10, 20) angeordnet ist, um vorrangig das Trennschaltmittel zu öffnen, wenn das Modussignal (DET, UHFON) einen Wert aufweist, der einem Kommunikationsmodus entspricht, in dem keine elektrische Spannung (Vcc2) an der mit dem ersten oder zweiten Stromversorgungsschaltkreis verbundenen Klemme des Trennschaltmittels (SW) vorhanden ist oder vorhanden sein sollte.

5. Integrierter Schaltkreis nach Anspruch 4, in dem der zweite Taktgenerator über die Verteilerleitung (5) versorgt wird und vom Modussignal aktiviert (ON/OFF) wird, wenn dies einen bestimmten Wert aufweist.

6. Integrierter Schaltkreis nach einem der Ansprüche 2 bis 5, umfassend einen Multiplexerschaltkreis (MUX1), der durch das Modussignal gesteuert wird, der am Eingang den Ausgang des ersten Taktgenerators und den Ausgang des zweiten Taktgenerators empfängt, und der ein internes Taktsignal (H), das an die Datenverarbeitungseinheit angelegt wird, abgibt.

7. Integrierter Schaltkreis nach einem der Ansprüche 2 bis 6, in dem das Modussignal an die Datenverarbeitungseinheit angelegt wird, die Datenverarbeitungseinheit angeordnet ist, um zumindest ein Übertragungsprotokoll von RFID-Daten und ein Übertragungsprotokoll von UHF-Daten auszuführen und um das eine der Protokolle in Abhängigkeit vom Wert des Modussignals auszuwählen.

8. Integrierter Schaltkreis nach einem der Ansprüche 2 bis 7, umfassend:
- einen ersten Modulations- und Demodulationsschaltkreis (MOD1, DEMOD1) für das Übertragen und den Empfang von Daten über die Antennenspule (L),
- einen zweiten Modulations- und Demodulationsschaltkreis (MOD2, DEMOD2) für das Übertragen und den Empfang von Daten über die UHF-Antenne,
- Multiplexer- (MUX2) und Demultiplexerschaltkreise (DMUX), die durch das Modussignal gesteuert werden, um die Datenverarbeitungseinheit (DPU) mit dem einen der beiden Modulations- und Demodulationsschaltkreise zu verbinden.

9. Integrierter Schaltkreis nach einem der Ansprüche 2 bis 8, in dem der Schaltkreis zur Moduserkennung (MDC) angeordnet ist, um an den Klemmen der Spule (L) die erste induzierte Spannung (Va) zu erkennen, und das Modussignal auf einen bestimmten Wert zu bringen, wenn die erste induzierte Spannung erkannt ist.

10. Integrierter Schaltkreis nach einem der Ansprüche 2 bis 9, in dem der Schaltkreis zur Moduserkennung (MDC) einen Oszillationsdetektor der ersten induzierten Spannung umfasst.

11. Integrierter Schaltkreis nach einem der Ansprüche 2 bis 10, in dem der Schaltkreis zur Moduserkennung (MDC) einen Schwellwertdetektor der ersten induzierten Spannung umfasst.

12. Integrierter Schaltkreis nach einem der Ansprüche 3 und 4, in dem der Steuerschaltkreis (20) zur Steuerung des Trennschaltmittels (SW) einen Spannungserhöherschaltkreis (21), der eine Spannung (Vhv) zum Schließen des Trennschaltmittels abgibt, umfasst.

13. Integrierter Schaltkreis nach Anspruch 12, in dem der Spannungserhöherschaltkreis eine Ladungspumpe umfasst.

14. Integrierter Schaltkreis nach einem der Ansprüche 12 und 13, in dem das Trennschaltmittel einen Transistor mit einer Schwellenspannung (VT) umfasst.

15. Integrierter Schaltkreis nach einem der Ansprüche 3 und 4, in dem das Trermschaltmittel (SW) von einer Torschaltung (14), die durch die zweite Versorgungsspannung (Vcc2) elektrisch versorgt wird, gesteuert wird.

16. Integrierter Schaltkreis nach einem der Ansprüche 1 bis 15, der auf einem tragbaren Träger angeordnet ist und ein elektronisches Etikett oder eine Chipkarte ohne Kontakt bildet.
